# EUROPÄISCHE PATENTSCHRIFT

(11) **EP 3 325 301 B1**
(45) Veröffentlichungstag und Bekanntmachung des Hinweises auf die Patenterteilung: **02.12.2020**
(21) Anmeldenummer: 17755059.7
(22) Anmeldetag: 07.07.2017
(51) Int. Cl.: B60K 7/00

(54) **RADNABENANTRIEB**
WHEEL HUB DRIVE
ENTRAINEMENT DE MOYEU DE ROUE

(30) Priorität: 02.08.2016 DE 102016214269
(43) Veröffentlichungstag der Anmeldung: 30.05.2018
(73) Patentinhaber: Ziehl-Abegg Automotive GmbH & Co. KG, 74635 Kupferzell (DE)
(72) Erfinder: MUNZ, Maximilian, 74523 Schwäbisch Hall-Hessental (DE); MAS GILI, Jordi, 74653 Künzelsau (DE); GAUDITZ, Swen, 74423 Obersontheim (DE); PONCE-HEREDIA, Albaro, 8272 Ermatingen (CH); HOPPENSTEDT, Roland, Zweiflingen Zweiflingen (DE); MAYER, Edgar, 74635 Kupferzell (DE); KLETT, Sascha, 71570 Oppenweiler (DE); KAKUSCHKE, Isabell, 74676 Niedernhall (DE); VETTER, Uli, 74653 Künzelsau (DE); HAAG, Alexander, 74653 Ingelfingen (DE); FRUEH, Fabian, 74564 Crailsheim (DE); BUERKERT, Daniel, 74638 Waldenburg (DE)
(74) Vertreter: Patent- und Rechtsanwälte Ullrich & Naumann
(86) Internationale Anmeldenummer: PCT/DE2017/200064
(87) Internationale Veröffentlichungsnummer: WO 2018/024295

(56) Entgegenhaltungen:
- EP-A1- 0 865 978
- DE-A1-102004 044 688
- DE-A1-102008 011 870
- DE-A1-102014 209 177
- US-A1- 2015 108 823

## Beschreibung

Die vorliegende Erfindung betrifft einen Radnabenantrieb als direkter Antrieb eines Rades eines Fahrzeugs, insbesondere eines Nutzfahrzeugs, mit einem vorzugsweise als permanent erregter Synchronmotor ausgeführten elektrischen Außenläufermotor, der im Wesentlichen im Bereich innerhalb des Rads angeordnet ist, wobei zum Bremsen ein rotierendes Teil einer Reibungsbremse kraft- und/oder form- und/oder materialschlüssig an den Motor angebunden ist, wobei das rotierende Teil von außerhalb des Motors direkt oder indirekt mit dem Rotor des Motors wirkverbunden ist.

Beispielsweise bei kommunalen Nutzfahrzeugen hat das Antriebskonzept mit Elektromaschinen (E-Maschinen) einen nicht unerheblichen Anteil an der Antriebstechnologie. Während bei konventionellen Antriebsmaschinen, meist mit Diesel oder Gas arbeitend, hinter die Verbrennungskraftmaschine (VKM) ein Getriebe zur Drehmoment- und Drehzahlübersetzung geschaltet ist, kann bei E-Maschinen eine mechanische Getriebeübersetzung komplett entfallen, nämlich aufgrund einer entsprechenden Motorkennlinie. Im Rahmen eines Antriebskonzepts mit Elektromaschinen wird ein oder werden mehrere Radnabenantriebe als direkter Antrieb der Räder des Nutzfahrzeugs genutzt. Solche direkten E-Antriebe haben einen elektrischen Außenläufermotor als permanent erregter Synchronmotor (PESM).

Außenläufermotoren als rotativ getriebene elektrische Direktantriebe lassen sich grundsätzlich bei Elektrofahrzeugen, seriellen Hybridfahrzeugen, insbesondere bei Stadtbussen als Solo- oder Gelenkbusse, bei Flughafenbussen sowie bei Sonderfahrzeugen und Nutzfahrzeugen einsetzen.

Lediglich beispielhaft sei in Bezug auf einen solchen elektrischen Radnabenantrieb auf die Dokumente DE 41 10 638 A1, DE 10 2014 209 177 A1, DE 10 2004 044 688 A1, DE 2008 011 870 A1, JP 2008-307 917 A, DE 10 2008 004 085 A1 und DE 10 2013 200 117 A1 verwiesen. Zahlreiche Ausprägungen eines solchen Radnabenantriebs sind obendrein aus der Praxis bekannt.

Die EP 0 865 978 A1 offenbart einen Radnabenantrieb als direkten Antrieb eines Rades eines Fahrzeugs, mit einem elektrischen Außenläufermotor, der im Wesentlichen im Bereich innerhalb des Rads angeordnet ist, wobei zum Bremsen ein rotierendes Teil einer Reibungsbremse kraft- und/oder form- und/oder materialschlüssig an den Motor angebunden ist, wobei das rotierende Teil von außerhalb des Motors direkt oder indirekt mit dem Rotor des Motors wirkverbunden ist.

Bei bekannten Radnabenantrieben ist eine integrale, verschleißbehaftete Reibungsbremse vorgesehen. Dazu ist in der E-Maschine eine innenliegende, drehende Welle kraft- und/oder formschlüssig am Radnabenmotor angebunden. Aufgrund der beim Bremsen/Beschleunigen auftretenden Kräfte und Momente ist es erforderlich, die Welle äußerst groß zu dimensionieren und/oder aus hochfestem Material, insbesondere hochfestem Stahl, auszuführen, um einer Belastung aus Radaufstand und Bremsung dauerhaft standhalten zu können. Dabei soll eine Optimierung des Kraftflusses beim mechanischen Bremsen und Beschleunigen zwischen dem Bremssystem, dem Antrieb und der Straße stattfinden.

Bei Systemen der zuvor beschriebenen Art, bei denen sich mittig durch die E-Maschine bzw. den Motor eine drehende Welle erstreckt, ist die Lagerung auf der innenliegenden Welle angebunden und muss daher bezüglich der Radaufstandskraft starke Verformungen und insbesondere auch Schiefstellungen hinnehmen.

Ein weiteres Problem resultiert aus der Forderung, wonach der Luftspalt zwischen der Stator-Wicklung und den Rotormagneten während des Betriebs konstant zu halten ist. Dazu ist bei den bekannten Radnabenantrieben ein Dünnringlager eingesetzt, um Verbiegungen und Verformungen des Rotortopfes zu minimieren.

Schließlich kann bei den bekannten Radnabenantrieben um die drehende Welle bzw. das lagernde Bauteil konzentrisch herum ein Umrichter angeordnet sein (integrierte Anordnung des Umrichters), zumal bei integrierter Anordnung des Umrichters dort der einzige Raum zur Verfügung steht. Dadurch wird dem Konstrukteur eine Bauform des Umrichters aufgezwungen, die kosten- und fertigungstechnisch nicht optimal ist. Außerdem lässt sich ein derart ausgebildeter und angeordneter Umrichter ausschließlich bei Demontage der Radnabenantriebseinheit vom Achsantriebsmodul zur Wartung und/oder zum Austausch zugänglich machen. Dies ist äußerst wartungs-/kostenintensiv.

Im Lichte der voranstehenden Ausführungen liegt der Erfindung die Aufgabe zugrunde, einen Radnabenantrieb zu schaffen, der sich von den aus der Praxis bekannten Radnabenantrieben unterscheidet. Der Unterschied soll aus einer Optimierung des Kraftflusses beim mechanischen Bremsen zwischen Bremssystem, Antrieb und Straße resultieren. Außerdem soll der erfindungsgemäße Radnabenantrieb einfach in der Konstruktion sein und sich mit geringem Aufwand warten lassen. Schließlich soll eine hinreichende Stabilität der einzelnen Komponenten auch bei Spitzenbelastung gewährleistet sein.

Voranstehende Aufgabe ist durch die Merkmale des Anspruchs 1 gelöst. Danach ist der gattungsbildende Radnabenantrieb dadurch gekennzeichnet, dass der Motor außenseitig/radseitig einen abnehmbaren Flansch hat, durch dessen Entnahme ein Innenraum eines Stators des Motors und somit ein interner Umrichter und/oder ein weiterer Motorkreis und eine Elektrik/Elektronik zugänglich sind.

Erfindungsgemäß ist erkannt worden, dass eine Reibungsbremse mit innenliegender Welle einerseits anfällig ist und andererseits nicht unerheblichen Bauraum verschenkt. In Abkehr zu der aus dem Stand der Technik bekannten Lösung ist in erfindungsgemäßer Weise ein Motorkonzept geschaffen worden, wonach der Motor außenseitig/radseitig einen abnehmbaren Flansch hat, durch dessen Entnahme ein Innenraum eines Stators des Motors und somit ein interner Umrichter und/oder ein weiterer Motorkreis und eine Elektrik/Elektronik zugänglich sind. Somit werden die Kräfte nicht etwa durch eine in der Dimensionierung begrenzende, mehr oder weniger dicke Welle übertragen. Vielmehr ist das rotierende Teil vorzugsweise über einen Flansch direkt mit dem Rotor des Motors verbunden. Eine innenliegende Welle ist im Rahmen des erfindungsgemäßen Motorkonzepts nicht erforderlich. Die Belastung wird über eine größere Geometrie abgestützt, so dass die Werkstofffestigkeit sogar reduziert werden kann. Jedenfalls dominiert die Werkstofffestigkeit nicht mehr die Materialauswahl für das zwischen dem rotierenden Teil der Reibungsbremse und dem Rotor des Motors wirkenden Bauteil. Im Konkreten ist es von Vorteil, wenn zwischen dem rotierenden Teil der Reibungsbremse und dem Flansch sich ein Rohr/Zylinder erstreckt, wobei der Flansch Bestandteil des Rohrs/Zylinders sein kann.

An dieser Stelle sei angemerkt, dass es sich bei dem rotierenden Teil um die Bremsscheibe einer Scheibenbremsanlage handeln kann. Weitere Bauteile können wirkungstechnisch dazwischen angeordnet sein. Eine unmittelbare Anbindung ist jedoch von Vorteil.

Die Lagerung des rotierenden Teils erfolgt vorzugsweise entlang der Motorachse, entsprechend der Breite des Rotors am Ende bzw. nahe dem Ende des Rotors, und zwar auf dem nicht drehenden Statorträger. Dies bedeutet, dass die Lagerung auf größeren Durchmessern, innenliegend auf einem stehenden Bauteil anstelle (im Gegensatz zum Stand der Technik) auf einer drehenden Welle stabil abgestützt wird. Die Hauptlagerung erfolgt entlang der Motorachse, wodurch Schiefstellungen und Verformungen der lagernden Bauteile stark reduziert, wenn nicht sogar ausgeschlossen sind.

Der erforderliche Luftspalt zwischen den stehenden und beweglichen Teilen ist durch das geänderte Lagerungskonzept und das geschlossene Rotordesign sichergestellt. Er unterliegt geringeren Schwankungen als im Stand der Technik und kann somit kleiner ausgeführt werden, was sich wiederum positiv auf die Leistungsdichte und das Laufverhalten der E-Maschine auswirkt.

Das wesentliche Merkmal der Erfindung, wonach der Motor außenseitig/radseitig einen abnehmbaren Flansch hat, durch dessen Entnahme ein Innenraum eines Stators des Motors und somit ein interner Umrichter und/oder ein weiterer Motorkreis und eine Elektrik/Elektronik zugänglich sind, wird dadurch ermöglicht, dass eine innenliegende drehende Welle nicht erforderlich ist. Folglich ist innerhalb des Stators ein bauteilfreier Innenraum geschaffen, in dem ein interner Umrichter und ggf. weitere elektrische/elektronische Bauteile integrierbar sind. Im Gegensatz zum Stand der Technik ist hier keine koaxiale Bauform des Umrichters und der elektrischen/elektronischen Bauteile erforderlich. Vielmehr lässt der bauteilfreie Innenraum nahezu beliebige, kostengünstig herstellbare geometrische Formen des Umrichters und sonstiger elektrischer/elektronischer Bauteile zu, die dort als integrale Bauteile untergebracht werden können.

Im Rahmen einer weiteren Alternative oder einer Ergänzung ist es ebenso möglich, den bauteilfreien Innenraum des Stators zur Unterbringung eines weiteren elektromagnetischen Motorkreises zu nutzen, beispielsweise eines Innenläufers. Die beiden Motorkreise können vorzugsweise durch einen oder mehrere externe Umrichter betreibbar sein. Mit anderen Worten können in dem bauteilfreien Innenraum die Wicklung und Magnete des weiteren E-Motors angeordnet sein, wobei die beiden Motorkreise gemeinsam oder unabhängig voneinander per internem und/oder externem Umrichter betreibbar sind.

Nun bietet der Innenraum des Stators mit den darin angeordneten elektrischen/ elektronischen Bauteilen und ggf. mit dem Innenläufer den Vorteil, eine leicht zugängliche Revisionsöffnung zu schaffen, nämlich zur einfachen Wartung bzw. Reparatur. Dazu ist auf der Rad- bzw. Fahrbahnseite des E-Motors ein abnehmbarer Flansch vorgesehen, wodurch die Zugänglichkeit zum Umrichter und ggf. zu den weiteren elektrischen/elektronischen Bauteilen verbessert ist. Im Rahmen einer solchen Zugänglichkeit ist der Aufwand für Wartung, Reparatur und Austausch stark reduziert.

Es sei angemerkt, dass die zuvor angesprochene verbesserte Zugänglichkeit per Flansch bedingt, dass sich der Rotor, nach Ausbau des Flanschs, auf dem Statorträger abstützen kann. Bevorzugt ist dies über eine entsprechende Anordnung der Lager zu gewährleisten, so dass das Entfernen des Flansches keine Auswirkung auf die Positionierung der Bauteile hat. Andernfalls muss der nominale Spalt zwischen dem Rotor und dem Statorträger an einer definierten Abstützstelle kleiner ausgeführt sein als der Luftspalt zwischen den Rotormagneten und der Statorwicklung. Im Rahmen einer solchen Ausgestaltung lässt sich der Flansch ohne Beschädigung des Motors einfach demontieren, wodurch der Zugang geschaffen ist.

Schließlich sei angemerkt, dass sich der zuvor beschriebene Radnabenmotor als Antrieb für beliebige Fahrzeuge eignet, insbesondere für Nutzfahrzeuge und aufgrund der erforderlichen Breite der Felge insbesondere bei einer Felge mit Zwillingsbereifung.

Es gibt nun verschiedene Möglichkeiten, die Lehre der vorliegenden Erfindung in vorteilhafter Weise auszugestalten und weiterzubilden. Dazu ist einerseits auf die dem Anspruch 1 nachgeordneten Ansprüche und andererseits auf die nachfolgende Erläuterung eines bevorzugten Ausführungsbeispiels der Erfindung anhand der Zeichnung zu verweisen. In Verbindung mit der Erläuterung des bevorzugten Ausführungsbeispiels der Erfindung anhand der Zeichnung werden auch im Allgemeinen bevorzugte Ausgestaltungen und Weiterbildungen der Lehre erläutert. In der Zeichnung zeigen
- Fig. 1: in einer schematischen Schnittzeichnung, teilweise, ein Ausführungsbeispiel eines erfindungsgemäßen Radnabenantriebs mit Außenläufermotor, und
- Fig. 2: in einer schematischen Schnittzeichnung, teilweise, eine Variante des erfindungsgemäßen Radnabenantriebs bei der die Lagerung innenliegend auf stehenden Komponenten abgestützt ist.

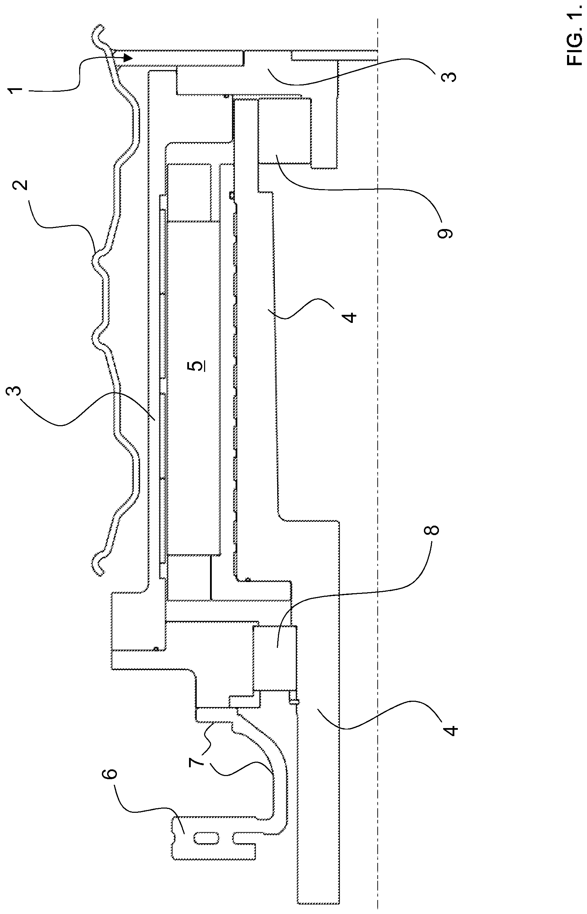

Figur 1. zeigt in einer schematischen Schnittzeichnung, teilweise, einen erfindungsgemäßen Radnabenantrieb mit Außenläufermotor, wobei der Radnabenantrieb einer Felge 1 für eine Zwillingsbereifung zugeordnet ist. Die Felge 1 ist mit ihrem Felgenbett 2 und ihrer Anbindung an den Antrieb lediglich angedeutet.

Der Radnabenantrieb umfasst als wesentliche Bestandteile einen drehfest mit der Felge 1 verbundenen Rotor 3, der mehrteilig ausgeführt sein kann. Innerhalb des Rotors 3 (Außenläufer) ist der Stator 4 als nicht drehendes Bauteil angeordnet. Wicklungen und Kühlhülse 5 des Stators 4 sind angedeutet.

Während im Stand der Technik axial durch den E-Motor sich eine mit einer Bremsscheibe verbundene Welle erstreckt, ist hier ein ganz anderes Motorkonzept realisiert, wonach nämlich das rotierende Teil der Reibungsbremse, in diesem Falle die Bremsscheibe 6, von außerhalb des Motors direkt mit dem Rotor 3 verbunden ist, und zwar über einen Flansch 7. Bei dem Flansch 7 kann es sich um ein separates oder integrales Bauteil handeln. Die Anbindung an den Rotor kann ebenfalls auf beliebige Weise erfolgen, nämlich kraft- und/oder form- und/oder materialschlüssig.

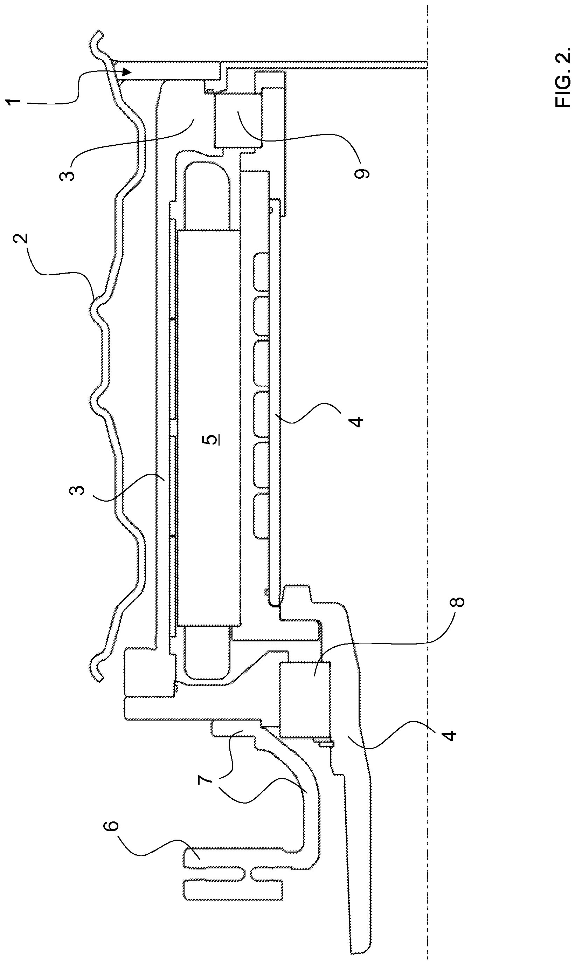

Fig. 2. zeigt eine Variante des erfindungsgemäßen Radnabenantriebs, bei der die Lagerung 8, 9 innenliegend auf stehenden Komponenten stabil abgestützt ist. Im Gegensatz dazu zeigt Fig. 1. eine Lageranordnung mit einem am Innenring drehend abgestützten Lager 9. Entsprechend befinden sich nach Fig. 2 die Lager 8, 9 unter Berücksichtigung der Breite des Rotors soweit wie möglich außen und wirken zwischen dem feststehenden Stator 4 und dem drehenden Rotor 3, der auf der Außenseite, der Reibungsbremse zugewandt, mit dem Flansch 7 und somit dem rotierenden Teil bzw. Bremsscheibe 6 der Reibungsbremse zugeordnet ist.

Im Lichte der allgemeinen Beschreibung und der voranstehenden Figurenbeschreibung seien die erfindungsgemäßen Vorteile und Ausführungen noch einmal in Abgrenzung zum Stand der Technik wie folgt zusammengefasst:
Nach der erfindungsgemäßen Ausführung ist die Lagerung von drehenden Innenringen auf einer Welle umgestellt auf stehende Innenringe auf einer Welle und/oder drehende Innenringe auf einem Flansch. Ein Flansch ist gegenüber einer Welle durch ein deutlich größeres Verhältnis "Durchmesser zu Länge" gekennzeichnet. Hierzu lassen sich die Lager an eine möglichst axial entfernte Position verschieben, welche das Ende des rotierenden Motorteils abgrenzt. Dadurch ist es möglich, den rotierenden Teil der Reibungsbremse (Bremsscheibe der Scheibenbremsanlage oder Bremstrommel der Trommelbremsanlage) mit einem großen drehenden Flansch direkt an den Rotor anzubinden. Hohe Bremsmomente und systembedingte Aufstellmomente der Scheibenbremsanlage sind dann über eine größere Geometrie und somit ein höheres Widerstandsmoment abgestützt. Die Werkstofffestigkeit kann dabei reduziert werden. Alternativ kann auch der Materialeinsatz bzw. die Materialstärke reduziert werden, um ein geringeres Gewicht zu erreichen. Dies ist unter Berücksichtigung der Faktoren Kosten, Gewicht und Lebensdauer abzuwägen.

Gemäß Erfindung ist die Lagerung auf größeren Durchmessern abgestützt, und zwar, innenliegend auf stehenden Komponenten statt auf drehender Welle gemäß Stand der Technik. Die erfindungsgemäße Anordnung ist daher stabiler. Die Hauptlagerung ist entlang der Motorachse und entsprechend der Breite des Rotors ausgelegt. Schiefstellungen und Verformungen der lagernden Bauteile sind aufgrund der geometrischen Ausprägung stark reduziert.

Der Luftspalt ist durch das geänderte Lagerungskonzept dauerhaft sichergestellt und unterliegt geringeren Schwankungen als im Stand der Technik. Die Anordnung kann somit kleiner ausgeführt werden, was positiven Effekt auf die Leistungsdichte und Laufperformance der E-Maschine hat.

Durch Entfall der innenliegenden drehenden Welle entsteht ein großer hohler Innenraum, der nicht durch eine Störgeometrie durchdrungen ist. Dadurch ist es möglich, einen integrierten Umrichter in einer nahezu beliebigen geometrischen Form auszubilden und ist somit kostengünstiger herzustellen. Alternativ oder zusätzlich kann der vorhandene Bauraum einen weiteren elektromagnetischen Motorkreis (d.h. Wicklung und Magnete ggf. auch als Innenlaufer) aufnehmen. Beide Motorkreise können durch einen oder mehrere interne und/oder externen Umrichter betrieben werden.

Durch ein innenliegendes Lager mit Spielpassung am Außendurchmesser hin zum Statorträger ist es möglich, einen abnehmbaren Flansch an der Fahrbahnseite des Motors zu realisieren, wodurch die Zugänglichkeit zum Umrichter begünstigt ist. Der Aufwand für Wartung und Austausch reduziert sich stark. Hierzu muss sich der Rotor, nach Ausbau des Flanschs, auf dem Statorträger abstützen. Der nominale Spalt zwischen Rotor und Statorträger sollte kleiner ausgeführt sein als der Luftspalt zwischen Rotormagnete und Statorwicklung. Somit ist der Flansch ohne Beschädigung des Motors demontierbar. Eine Einführfase für den Flansch sollte am Rotor vorhanden sein. Eine Zentrierung des Flanschs am Rotor sollte vor Zentrierung des Lagers am Statorträger zum Eingriff kommen.

Hinsichtlich weiterer vorteilhafter Ausgestaltungen der erfindungsgemäßen Lehre wird zur Vermeidung von Wiederholungen auf den allgemeinen Teil der Beschreibung sowie auf die beigefügten Ansprüche verwiesen.

### Bezugszeichenliste

- 1: Felge, Zwillingsfelge
- 2: Felgenbett
- 3: Rotor (des E-Motors)
- 4: Stator (des E-Motors)
- 5: Wicklungen, Kühlhülse (des Stators)
- 6: Bremsscheibe (rotierendes Teil der Reibungsbremse)
- 7: Flansch (zur Verbindung zwischen dem rotierenden Teil der Reibungsbremse und dem Rotor)
- 8: Lager B-Seite
- 9: Lager A-Seite

## Patentansprüche

1. Radnabenantrieb als direkter Antrieb eines Rades eines Fahrzeugs, insbesondere eines Nutzfahrzeugs, mit einem vorzugsweise als permanent erregter Synchronmotor ausgeführten elektrischen Außenläufermotor, der im Wesentlichen im Bereich innerhalb des Rads angeordnet ist, wobei zum Bremsen ein rotierendes Teil (6) einer Reibungsbremse kraft- und/oder form- und/oder materialschlüssig an den Motor angebunden ist, wobei das rotierende Teil (6) von außerhalb des Motors direkt oder indirekt mit dem Rotor (3) des Motors wirkverbunden ist,
**dadurch gekennzeichnet, dass** der Motor außenseitig/radseitig einen abnehmbaren Flansch hat, durch dessen Entnahme ein Innenraum eines Stators (4) des Motors und somit ein interner Umrichter und/oder ein weiterer Motorkreis und eine Elektrik/Elektronik zugänglich sind.

2. Antrieb nach Anspruch 1, **dadurch gekennzeichnet, dass** das rotierende Teil (6) über einen Flansch (7) direkt mit dem Rotor (3) des Motors verbunden ist.

3. Antrieb nach Anspruch 2, **dadurch gekennzeichnet, dass** sich zwischen dem rotierenden Teil (6) und dem Flansch (7) ein Rohr/Zylinder erstreckt, bzw. dass der Flansch (7) Bestandteil eines Rohrs/Zylinders ist.

4. Antrieb nach einem der Ansprüche 1 bis 3, **dadurch gekennzeichnet, dass** es sich bei dem rotierenden Teil (6) um die Bremsscheibe einer Scheibenbremsanlage handelt.

5. Antrieb nach einem der Ansprüche 1 bis 3, **dadurch gekennzeichnet, dass** es sich bei dem rotierenden Teil (6) um die Bremstrommel einer Trommelbremsanlage handelt.

6. Antrieb nach einem der Ansprüche 1 bis 5, **dadurch gekennzeichnet, dass** die Lagerung des rotierenden Teils (6) vorzugsweise entlang der Motorachse, entsprechend der Breite des Rotors (3) am Ende bzw. nahe dem Ende des Rotors (3), auf dem nicht drehenden Statorträger erfolgt.

7. Antrieb nach einem der Ansprüche 1 bis 6, **dadurch gekennzeichnet, dass** in dem Innenraum des Stators (4) ein interner Umrichter und ggf. weitere elektrische/elektronische Bauteile integriert sind.

8. Antrieb nach einem der Ansprüche 1 bis 7, **dadurch gekennzeichnet, dass** in dem Innenraum des Stators (4) ein weiterer elektromagnetischer Motorkreis, beispielsweise als Innenläufer ausgebildet, untergebracht ist, wobei die beiden Motorkreise vorzugsweise durch einen oder mehrere externe Umrichter betreibbar sind.

9. Antrieb nach einem der Ansprüche 1 bis 8, **dadurch gekennzeichnet, dass** es sich bei dem Rad um ein Zwillingsrad für eine Zwillingsbereifung handelt.

## Claims

1. Wheel hub drive acting as a direct drive of a wheel of a vehicle, in particular a utility vehicle, having an electrical external rotor motor which is preferably constructed as a permanently excited synchronous motor and which is arranged substantially in the region inside the wheel, wherein for braking a rotating component (6) of a friction brake is connected to the motor in a non-positive-locking and/or positive-locking and/or materially engaging manner, wherein the rotating component (6) is operationally connected directly or indirectly to the rotor (3) of the motor from outside the motor,
**characterised in that** the motor has at the outer side/wheel side a removable flange, by removing which an inner space of a stator (4) of the motor and consequently an internal inverter and/or an additional motor circuit and an electrical/electronic system are accessible.

2. Drive according to claim 1, **characterised in that** the rotating component (6) is directly connected to the rotor (3) of the motor by means of a flange (7).

3. Drive according to claim 2, **characterised in that** a pipe/cylinder extends between the rotating component (6) and the flange (7) or **in that** the flange (7) is a component of a pipe/cylinder.

4. Drive according to any one of claims 1 to 3, **characterised in that** the rotating component (6) is a brake disc of a disc brake system.

5. Drive according to any one of claims 1 to 3, **characterised in that** the rotating component (6) is a brake drum of a drum brake system.

6. Drive according to any one of claims 1 to 5, **characterised in that** the support of the rotating component (6) is preferably carried out along the motor axis, in accordance with the width of the rotor (3) at the end or close to the end of the rotor (3), on the non-rotating stator carrier.

7. Drive according to any one of claims 1 to 6, **characterised in that** an internal inverter and where applicable additional electrical/electronic components are integrated in the inner space of the stator (4).

8. Drive according to any one of claims 1 to 7, **characterised in that** another electromagnetic motor circuit which is, for example, constructed as an internal rotor, is accommodated inside the stator (4), wherein the two motor circuits can preferably be operated by means of one or more external inverters.

9. Drive according to any one of claims 1 to 8, **characterised in that** the wheel is a dual wheel for a dual tyre.

## Revendications

1. Entraînement de moyeu de roue en tant qu'entraînement direct d'une roue d'un véhicule, plus particulièrement d'un véhicule utilitaire, avec un moteur à rotor extérieur électrique réalisé de préférence comme un moteur synchrone excité en permanence, qui est disposé globalement à l'intérieur de la roue, dans lequel, pour le freinage, une partie rotative (6) d'un frein à friction est reliée par force et/ou par complémentarité de forme et/ou par liaison de matière au moteur, dans lequel la partie rotative (6) est reliée de manière fonctionnelle, à partir de l'extérieur du moteur, directement ou indirectement avec le rotor (3) du moteur,
**caractérisé en ce que** le moteur comprend, côté extérieur/côté roue, une bride amovible dont le retrait permet d'accéder à un espace interne d'un stator (4) du moteur et donc à un convertisseur interne et/ou un circuit de moteur supplémentaire et un système électrique/électronique.

2. Entraînement selon la revendication 1, **caractérisé en ce que** la partie rotative (6) est reliée, par l'intermédiaire d'une bride (7), directement avec le rotor (3) du moteur.

3. Entraînement selon la revendication 2, **caractérisé en ce que**, entre la partie rotative (6) et la bride (7) s'étend un tube/cylindre resp. **en ce que** la bride (7) fait partie intégrante d'un tube/cylindre.

4. Entraînement selon l'une des revendications 1 à 3, **caractérisé en ce que** la partie rotative (6) est le disque de freinage d'une installation de freinage à disque.

5. Entraînement selon l'une des revendications 1 à 3, **caractérisé en ce que** la partie rotative (6) est le tambour de freinage d'une installation de freinage à tambour.

6. Entraînement selon l'une des revendications 1 à 5, **caractérisé en ce que** le logement de la partie rotative (6) a lieu de préférence le long de l'axe du moteur, de manière correspondante à la largeur du rotor (3) à l'extrémité resp. près de l'extrémité du rotor (3), sur le support de stator non rotatif.

7. Entraînement selon l'une des revendications 1 à 6, **caractérisé en ce que**, dans l'espace interne du stator (4) sont intégrés un convertisseur interne et, le cas échéant, des composants électriques/électroniques supplémentaires.

8. Entraînement selon l'une des revendications 1 à 7, **caractérisé en ce que**, dans l'espace interne du stator (4), est logé un circuit de moteur électromagnétique supplémentaire, par conçu comme un rotor interne, dans lequel les deux circuits de moteur peuvent être actionnés de préférence par un ou plusieurs convertisseurs externes.

9. Entraînement selon l'une des revendications 1 à 8, **caractérisé en ce que** la roue est une roue jumelée pour un équipement pneumatique jumelé.
